# EUROPÄISCHE PATENTSCHRIFT

(11) **EP 2 715 206 B1**
(45) Veröffentlichungstag und Bekanntmachung des Hinweises auf die Patenterteilung: **15.08.2018**
(21) Anmeldenummer: 12709801.0
(22) Anmeldetag: 14.03.2012
(51) Int. Cl.: F16M 11/24

(54) **VORRICHTUNG ZUR ERZEUGUNG EINER KOMPENSATIONSKRAFT**
DEVICE FOR GENERATING A COMPENSATION FORCE
DISPOSITIF DESTINÉ À GÉNÉRER UNE FORCE DE COMPENSATION

(30) Priorität: 31.05.2011 DE 102011102907
(43) Veröffentlichungstag der Anmeldung: 09.04.2014
(73) Patentinhaber: Hydac International GmbH, 66280 Sulzbach/Saar (DE)
(72) Erfinder: HAHMANN, Wolfgang, 47906 Kempen (DE)
(74) Vertreter: Bartels und Partner, Patentanwälte
(86) Internationale Anmeldenummer: PCT/EP2012/001138
(87) Internationale Veröffentlichungsnummer: WO 2012/163439

(56) Entgegenhaltungen:
- EP-A2- 0 057 165
- FR-A- 1 544 702
- US-A- 3 524 556
- US-A- 3 717 104
- US-A- 4 360 187
- US-B1- 6 379 119

## Beschreibung

Die Erfindung betrifft eine Vorrichtung zur Erzeugung einer Kompensationskraft gemäß den Merkmalen des Oberbegriffes des Patentanspruches 1.

Bei Maschinen und Anlagen müssen zum Teil Baueinheiten mit hohem Gewicht vertikal auf- und abbewegt werden, um Funktionen, wie etwa Stellfunktionen bei Roboterarmen mit Schweiß- oder Nietwerkzeugen, ausführen zu können. Man denke auch an Bewegungsabläufe bei Spindelkästen und Supporten von Werkzeugmaschinen oder von Lagereinrichtungen bei Regalbedienfahrzeugen. Zur Erleichterung der beispielhaft genannten Anwendungsfälle sind Gewichtsausgleichssysteme bekannt. Solche Gewichtsausgleichssysteme können Gegengewichtsspeicher mit mechanischem Energieaustausch oder Federspeicher mit mechanischem Energieaustausch aufweisen. Bekannt sind weiter hydropneumatische Speicher mit fluidischem Energieaustausch über Hydraulikzylinder oder Gasspeicher mit fluidischem Energieaustausch über pneumatische Zylinder. In solchen Gewichtsausgleichssystemen treten auch veränderliche dynamische Kräfte auf, insbesondere durch positive oder negative Beschleunigungen von Massen. Veränderliche statische Kräfte entstehen beispielsweise, wenn die betreffende Masse nicht linear betätigt, insbesondere gehoben oder gesenkt wird, sondern ein überlagerter Bewegungsablauf vorliegt.

DE 197 42 051 B4 beschreibt ein Stativ für ein bewegbar anzuordnendes Gerät, umfassend einen ersten Stativteil, einen relativ zum ersten Stativteil bewegbaren zweiten Stativteil mit einem an dem ersten Stativteil angelenkten, um eine Schwenkachse schwenkbaren Schwenkarm und einen Energiespeicher, welcher auf einen festen Angriffspunkt am Schwenkarm eine auf einen Widerlagerpunkt am ersten Stativteil gerichtete Kraft ausübt, wobei die Schwenkachse und der Widerlagerpunkt eine Vertikalebene definieren und wobei der Widerlagerpunkt bei einer Verschwenkung des Stativarmes raumfest relativ zum ersten Stativteil ist. Um ein Stativ mit einem Gewichtsausgleichssystem mit geringem Gewicht auszustatten, ist vorgesehen, dass der Energiespeicher über ein am Angriffspunkt angelenktes Seil auf den zweiten Stativteil einwirkt und eine das Seil zum Angriffspunkt umlenkende Rolle um den am Außenumfang der Seilrolle liegenden Widerlagerpunkt schwenkbar gelagert ist.

Bei den bekannten Gewichtsausgleichssystemen ist das wirksame Gewicht des Gegengewichts für das jeweilige Bauteil konstant. Ein vollständiger Ausgleich der Kräfte bei einer Bewegung der Masse ist daher höchstens für einen einzigen Betriebszustand möglich. Im Allgemeinen müssen aber noch zusätzliche Bedingungen eingehalten werden, welche die Möglichkeit eines optimalen Kräfteausgleichs noch beträchtlich einengen. Häufig bedarf es der Zufuhr von Energie von außen und zudem in variabler Größe.

Bei Gewichtsausgleichssystemen mit an einem Zugmittel wirkendem Gegengewicht ist besonders die Verdoppelung der bewegten Masse und das zusätzliche, unter Umständen hohe Bauraumvolumen von Nachteil. Ferner bedingt das Zugmittel, dass Schwingungen in dem Gewichtsausgleichssystem entstehen können. Die genannten Nachteile werden bei anderen Bauarten, beispielsweise mit Federspeichern oder Druckbehältern, vermieden, doch besitzen solche Vorrichtungen aufgrund der genannten Energiespeicher mitunter unerwünschte Federcharakteristika oder auch Hysteresisverhalten. Die von den mechanischen oder hydraulischen Energiespeichern aufbringbaren Kompensationskräfte können mit variabler Lage des Bauteils, wie zunehmender Hubhöhe, abnehmen. Die unerwünschte Abweichung der Kompensationskraft von der zu kompensierenden Kraft lässt sich zwar durch einen Mehraufwand an Speicherkapazität verringern, jedoch entstehen durch diese konstruktive Maßnahme nicht unerhebliche Mehrkosten für die Bereitstellung eines Gewichtsausgleichssystems.
Aus dem Dokument EP 0 057 165 A2 ist eine gattungsgemäße Vorrichtung zur Erzeugung einer Kompensationskraft F_{X} bekannt, die gegen eine in eine Kraftrichtung F_{G} wirkende Gewichtskraft F_{G} mindestens eines bewegbaren Bauteils wirkt, umfassend mindestens einen in eine Aktuatorrichtung F_{Z} bewegbaren Aktuator, der an mindestens einen Energiespeicher anschließbar ist und mit einer Aktuatorkraft F_{Z} am jeweiligen Bauteil angreift, wobei die Kraftrichtung F_{G} und die Aktuatorrichtung F_{Z} einen vorgebbaren Winkel α derart einschließen, dass die gegen die Kraftrichtung F_{G} gerichtete Kraftkomponente (cos α · F_{Z}) der Aktuatorkraft F_{Z} die Kompensationskraft F_{X} zur Gewichtskraft F_{G} bildet, und wobei der mindestens eine Aktuator ein Stellglied eines hydraulischen Zylinders ist.

Die bekannte Lösung dient einem hydraulischen Ladesystem, bei dem die Vorrichtung zur Erzeugung der Kompensationskraft für ein gesteuertes Gleiten beim Einführen eines zylindrischen Objekts in einen Behälter dient. Hierzu wird das zylindrische Objekt auf am Ende der Stellglieder der Aktuatoren angebrachten frei drehbaren Gummirollen gelagert, wobei die dahingehenden Aktuatoren in einem festen Winkel von jeweils 45° gegenüber der horizontalen Ebene angeordnet und insoweit aufeinander zugestellt sind.

Ausgehend von diesem Stand der Technik liegt der Erfindung daher die Aufgabe zugrunde, eine Vorrichtung bereitzustellen, die bei einer verringerten Speicherkapazität des Energiespeichers und einem verringerten Bauraumbedarf zur Erzeugung einer optimierten Kompensationskraft geeignet ist.

Diese Aufgabe wird gelöst durch eine Vorrichtung mit den Merkmalen des Patentanspruches 1 in seiner Gesamtheit.

Dadurch, dass die Kraftrichtung F_{G} und die Aktuatorrichtung F_{Z} einen vorgebbaren Winkel α derart einschließen, dass die gegen die Kraftrichtung F_{G} gerichtete Kraftkomponente der Aktuatorkraft F_{Z} die Kompensationskraft F_{X} zur Gewichtskraft F_{G} bildet, beträgt die vom Aktuator auf das Bauteil aufgebrachte Kompensationskraft F_{X}, welche entgegen der Kraftrichtung F_{G} der zu kompensierenden Kraft F_{G} gerichtet ist, dem Betrag nach gemäß der Beziehung in dem von den Kräftevektoren F_{X} und F_{Z} aufgespannten Dreieck F_{X} = F_{Z} · cos α.

Gemäß dem kennzeichnenden Teil des Patentanspruches 1 variiert der Winkel α in Abhängigkeit der Lage des jeweiligen Bauteils, der zu kompensierenden Kraft F_{G} und/oder des Speicherzustandes des Energiespeichers, so dass durch entsprechende Wahl der verschiedenen Einflussparamter, wie der Abmessungen der Zylinder, deren Stellglied der jeweilige Aktuator ist, des Winkels α als Maß der Schrägstellung und der Speicherkapazität des Energiespeichers, die Energie im Energiespeicher und damit die Aktuatorkraft F_{Z} bei einer vorgegebenen Bewegung, wie einem Zylinderhub, des Bauteils genau um den Betrag ansteigen kann, um den durch eine Vergrößerung des Winkels α die Kompensationskraft F_{X} bzw. die entsprechende Kraftkomponente (cos α · F_{Z}) verringert wird.

Da in einem bevorzugten Winkelbereich von 0° < α < 90° für die Kosinusfunktion 0 < cos α < 1 gilt, ist die Kompensationskraft F_{X} betragsmäßig geringer als die Aktuatorkraft F_{Z}. Anders ausgedrückt, wirkt lediglich die gegen die Kraftrichtung F_{G} der zu kompensierenden Kraft F_{G} wirkende Kraftkomponente cos α · F_{Z} als Kompensationskraft Fₓ. Hieraus ergibt sich die technische Wirkung, dass mit einer verringerten Speicherkapazität des mindestens einen Energiespeichers gearbeitet werden kann und folglich ein reduzierter Bauraum erforderlich ist. Insgesamt kann die erfindungsgemäße Vorrichtung bei reduzierten Kosten gegenüber der herkömmlichen Bauweise hergestellt und in einem kleineren Bauraum angeordnet werden. Erfindungsgemäß wird der Aufwand an Speicherkapazität des Energiespeichers und entsprechend an Bauraum dadurch verringert, dass der die Kompensationskraft generierende Aktuator schräg zur Kraftrichtung des der zu kompensierenden Kraft ausgerichtet wird. Vorteilhafte Ausgestaltungen der erfindungsgemäßen Einrichtung sind Gegenstände der Unteransprüche.

Zweckmäßigerweise ist bei einer ersten, vorzugsweise unteren, Endlage und bei einer zweiten, vorzugsweise oberen, Endlage des Bauteils die Kompensationskraft betragsmäßig gleich groß. Hieraus ergibt sich der Vorteil einer guten Betätigbarkeit des von der erfindungsgemäßen Vorrichtung mit einer Kompensationskraft beaufschlagten Bauteils. Es ist jedoch auch vorstellbar, dass ein einmalig vorgegebener Winkel während des gesamten Bewegungsablaufs des Bauteils zwischen einer ersten, vorzugsweise unteren, Endlage und einer zweiten, vorzugsweise oberen, Endlage beibehalten wird.

Typischerweise ist die zu kompensierende Kraft die Gewichtskraft des Bauteils. Alternativ oder zusätzlich können in einer horizontalen, senkrecht zur vertikalen Gewichtskraft stehenden Bewegungsrichtung gerichtete Bewegungen des Bauteils kompensiert und/oder gedämpft werden.

In einer bevorzugten Ausführungsform der erfindungsgemäßen Vorrichtung sind mehrere an einen gemeinsamen Energiespeicher anschließbare Aktuatoren vorgesehen. Typischerweise sind die Aktuatoren gleichartig ausgebildet und greifen in gleichmäßiger Anordnung am Bauteil an. Neben dem Vorteil einer Bauraumreduzierung für die Aktuatoren wird durch den gleichmäßigen Angriff an mehreren Stellen des Bauteils ein sicherer, weitestgehend erschütterungsfreier Bewegungsablauf desselben sichergestellt.

Bevorzugterweise ist der mindestens eine Energiespeicher hydraulisch, pneumatisch und/oder mechanisch ausgebildet. Der Energiespeicher kann als Druckspeicher ausgebildet sein. Es ist jedoch auch denkbar, ein pneumatisches oder mechanisches Energiespeichersystem einzusetzen. Auch Kombinationen unterschiedlicher Energiespeicher sind vorstellbar.

Besonders bevorzugt ist der mindestens eine Aktuator als Stellglied eines hydraulischen Zylinders ausgebildet. Die hydraulischen Zylinder sind zweckmäßigerweise an einen Hydrospeicher angeschlossen.

In einem besonders bevorzugten Ausführungsbeispiel weist die Vorrichtung zur Erzeugung einer Kompensationskraft lediglich einen einzigen Energiespeicher mit mechanischer, pneumatischer oder hydraulischer Wirkungsweise auf, sowie mit einer Energierückgewinnungsmöglichkeit zur Betätigung von zumindest einem Aktuator, vorzugsweise jedoch zur Betätigung von mehreren Aktuatoren, wie Stellgliedern von Zylindern. Hierbei kann der Energiespeicher eine von dem mindestens einen Aktuator trennbare Baueinheit bilden und mit dem jeweiligen Aktuator zur Aufbringung der Aktuatorkraft medienführend verbindbar sein.

Die Erfindung umfasst weiter eine Bewegungseinrichtung zum Bewegen eines Bauteils, insbesondere eine Hubeinrichtung zum Anheben und Absenken eines Bauteils, mit einer erfindungsgemäßen Vorrichtung. Mittels einer Hubeinrichtung wird das Bauteil gegen seine Gewichtskraft in vertikaler Richtung bewegt. Die gegen die Gewichtskraft gerichtete Kompensationskraft ist insbesondere beim Absenken des Bauteils erforderlich. Hierbei kann zum Bewegen des Bauteils im Energiespeicher gespeicherte Energie verbraucht werden. Somit wird insgesamt der Energieverbrauch zum Betrieb der Bewegungseinrichtung reduziert, da durch die erfindungsgemäße Vorrichtung kompensierte Energie wiederverwendet wird.

Nachstehend ist die Erfindung anhand eines in der Zeichnung dargestellten Ausführungsbeispiels im Einzelnen erläutert. Es zeigen:
- Fig. 1: eine Funktionsskizze eines Ausführungsbeispiels einer erfindungsgemäßen Vorrichtung;
- Fig. 2: beispielhafte Verläufe von Gewichtskraft und möglichen Kompensationskräften bei einer herkömmlichen Vorrichtung;
- Fig. 3: den Speicheraufwand in Abhängigkeit von der zulässigen Sollwertabweichung bei der erfindungsgemäßen Vorrichtung im Vergleich zu einer herkömmlichen Vorrichtung;
- Fig. 4: verschiedene Aktuatorkräfte und die Kompensationskraftabweichung vom Sollwert bei der erfindungsgemäßen Vorrichtung.

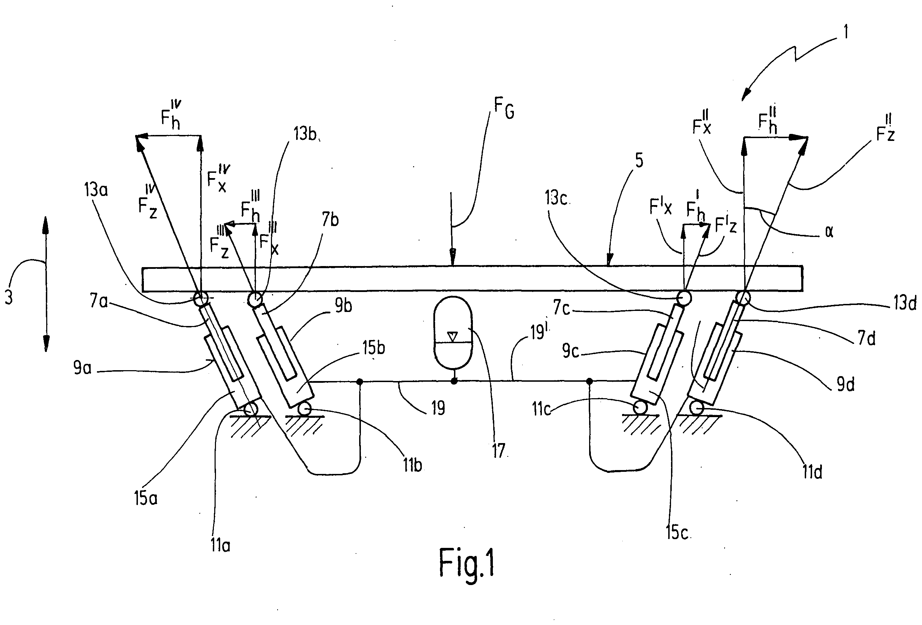

Die Fig. 1 zeigt eine Vorrichtung 1 zur Erzeugung einer Kompensationskraft Fx, welche an einem in vertikaler Richtung 3 bewegbaren Bauteil 5 angreift. Das Bauteil 5 ist als Maschinen- oder Maschinenteil-Plattform ausgebildet und kann schwergewichtige, d.h., eine große Masse aufweisende Maschinen oder Maschinenteile aufnehmen. Insgesamt wirkt am Bauteil 5 eine Gewichtskraft F_{G}, welche als Normalkraft ausgebildet in vertikaler Richtung 3 gerichtet ist.

Die Vorrichtung 1 umfasst in der vorliegenden Ausführungsform insgesamt vier Aktuatoren 7a, 7b, 7c, 7d, welche jeweils als Stellglieder eines hydraulischen Zylinders 9a - 9d ausgebildet sind. Die Zylinder 9a - 9d sind über untere Auflager 11a - 11d bodenseitig und über obere Auflager 13a - 13d an einer Unterseite des Bauteils 5 befestigt bzw. greifen an diesem an. Jeder Zylinder 9a - 9d ist über seinen jeweiligen Arbeitsraum 15a - 15d fluidführend mit einem als Hydrospeicher ausgebildeten Energiespeicher 17 verbunden. Die in der Figur linksseitig angeordneten Zylinder 9a und 9b sind über eine gemeinsame Fluidleitung 19 mit dem Energiespeicher 17 verbunden, entsprechend die rechtsseitig angeordneten Zylinder 9c, 9d über eine gemeinsame Fluidleitung 19'. In dem gezeigten Ausführungsbeispiel sind die Zylinder 9a - 9d als einfach wirkende Arbeitszylinder in der Art von Hydraulikzylindern ausgebildet. Es können jedoch auch doppeltwirkende Arbeitszylinder und/oder Arbeitszylinder in der Art von Pneumatikzylindern eingesetzt werden. Die oberen und unteren Auflager 11a - 11d, 13a - 13d sind jeweils ortsfest am Bauteil 5 bzw. am Boden angeordnet.

Bei einer Bewegung des jeweiligen Aktuators 7a - 7d in Aktuatorrichtung F_{Z} wird der Druck im jeweiligen Arbeitsraum 15a - 15d und folglich im fluidführend angeschlossenen Energiespeicher 17 erhöht oder erniedrigt. In Abhängigkeit des Drucks bzw. der Energie im Energiespeicher 17 vollführt der jeweilige Aktuator 7a bis 7d eine Bewegung in Aktuatorrichtung F_{Z} und übt eine Aktuatorkraft F_{Z} auf das Bauteil 5 aus. Die Normalkomponente bzw. in vertikaler Richtung 3 entgegen der Gewichtskraft F_{G} gerichtete Komponente der Aktuatorkraft F_{Z} aller Aktuatoren 7a bis 7d ergibt die auf das Bauteil 5 wirkende Kompensationskraft F_{X}. Wie aus dem gezeichneten Kräftedreieck gut ersichtlich, ergibt sich der Betrag der Kompensationskraft F_{X} aus der mathematischen Beziehung F_{X} = cos α · F_{Z}. Da der vorgebbare Winkel α, welcher von der Kraftrichtung F_{G} der Gewichtskraft F_{G} und der Aktuatorkraft F_{Z} eingeschlossen wird, ungleich 0 ist, gilt in dem zu betrachtenden Winkelbereich 0 < α < 90° stets Fₓ < F_{z}. Bei den herkömmlichen Vorrichtungen verläuft die Aktuatorkraft F_{Z} parallel zur Gewichtskraft F_{G}, so dass α = 0, cos α = 1 und F_{X} = F_{Z}. Der horizontale Anteil der Aktuatorkraft F_{H} der in der Bildebene rechten Aktuatoren 7c und 7d wird durch die horizontalen Anteile der Aktuatorkraft F_{H} der linken Aktuatoren 7a und 7b kompensiert, d.h. ausgeglichen. Durch die in entgegengesetzte Richtungen geneigten Aktuatoren 7a, 7b; 7c, 7d ist das Bauteil 5 statisch bestimmt gelagert. Es ist darüber hinaus möglich, die Aktuatoren 7a bis 7d unterschiedlich weit auszufahren, um auf diese Weise eine gewünschte Neigung des Bauteils 5 zu erzeugen.

Bei der in Fig. 1 gezeigten Vorrichtung 1 wird die gesamte Kompensationskraft F_{X} durch die vier Aktuatoren 7a - 7d der Zylinder 9a - 9d zu gleichen Teilkräften F'_{X} bzw. F'_{Z} aufgebracht. Hierbei ist zu beachten, dass die für die links gezeigten Aktuatoren 7a und 7b wirkenden Kräftedreiecke spiegelverkehrt zu den für die rechts gezeigten Aktuatoren 7c und 7d gezeigten Kräftedreiecke einzuzeichnen wären. Wird das Bauteil 5 aufgrund der an ihm angreifenden Gewichtskraft F_{G} in die gezeigte Richtung nach unten bewegt, so steigt der Druck im Energiespeicher 17 und entsprechend in den Arbeitsräumen 15a - 15d und folglich wird die Aktuatorkraft F_{Z} bzw. die jeweilige Teilkraft F'_{Z} vergrößert. Zugleich vergrößert sich die Schrägstellung der Aktuatoren 7a - 7d relativ zum Bauteil 5 und folglich die Schrägstellung der Aktuatorrichtung F_{Z} zur Kraftrichtung F_{G} bzw. zur Normalkomponente der Gewichtskraft F_{G}. Einhergehend mit der Vergrößerung des Winkels α wird der entsprechende Kosinuswert cos a verringert. Die Vorrichtung 1 ist somit allein durch die Definition der geometrischen Parameter, wie dem Winkel α und die Bemessung der Arbeitsräume 15a - 15d und des Speicherdruckes und Speichervolumens des Energiespeichers 17 in der Lage, eine konstante Kompensationskraft F_{X} bereitzustellen, die der zu kompensierenden Gewichtskraft F_{G} des Bauteils 5 entgegengesetzt ist.

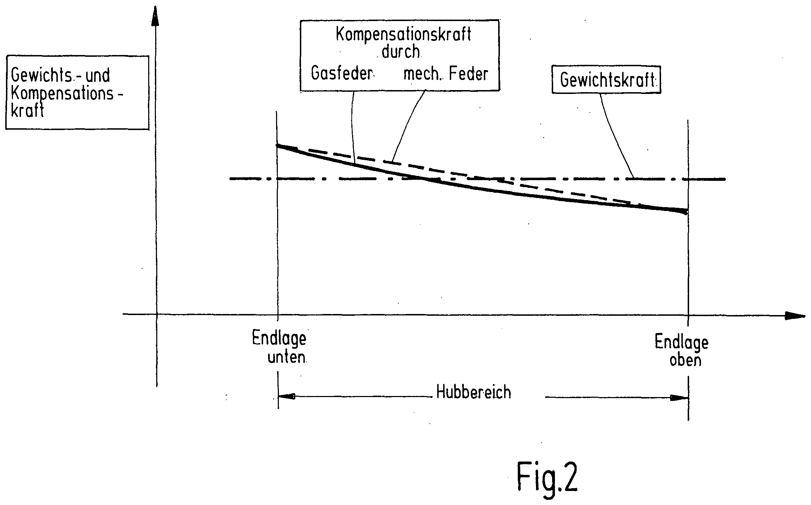

Fig. 2 zeigt für eine herkömmliche Vorrichtung mögliche Verläufe von Gewichtskraft und Kompensationskräften in einem Hubbereich für ein Bauteil zwischen einer unteren Endlage und einer oberen Endlage. Während die zu kompensierende Gewichtskraft konstant bleibt, da sich die Masse des zu bewegenden Bauteils nicht ändert, nehmen die Kompensationskräfte mit zunehmender Hubhöhe, anders ausgedrückt mit Annäherung an die obere Endlage, ab. Eine mechanische Feder entspannt sich ebenso wie der Druck in einem komprimierbaren Gasvolumen dadurch, dass dem jeweiligen Energiespeicher Energie zur Durchführung der Hubbewegung entnommen wird. Die Abweichung der Kompensationskraft von der zu kompensierenden Gewichtskraft mit zunehmender Hubhöhe lässt sich durch einen Mehraufwand an Speicherkapazität verringern, was die Kosten für eine solche Vorrichtung um einiges erhöht.

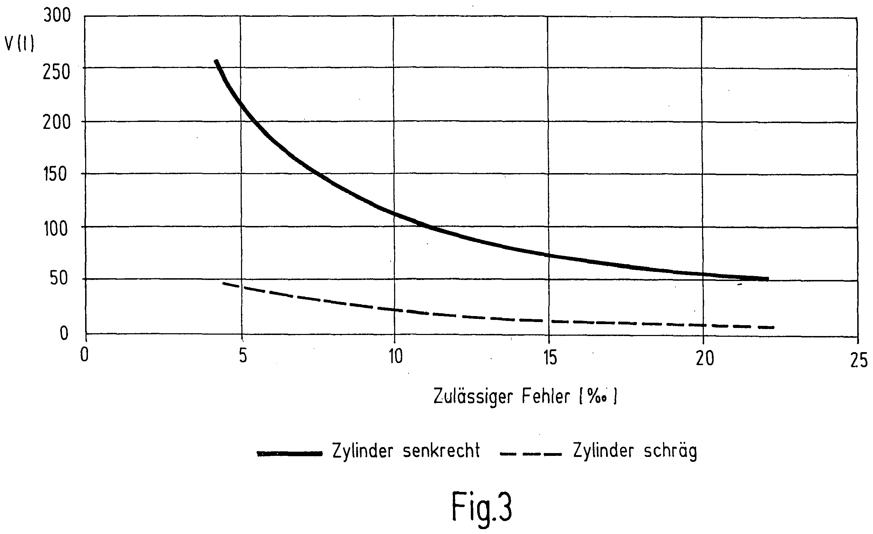

In der oberen Kurve in Fig.3 ist der für einen fluidischen Gewichtsausgleich erforderliche Speicheraufwand für einen Hydraulikzylinder mit 0,95 l Hubvolumen dargestellt. Bei einer zulässigen Abweichung um maximal + 1 % von der Gewichtskraft F_{G} ist ein Speichervolumen V für den Energiespeicher 17 von 110 l erforderlich. Der Verlauf der Kurve zeigt, dass die erforderliche Speicherkapazität sich umgekehrt proportional zur zulässigen Abweichung von der gewünschten Kompensationskraft F_{X} verhält.

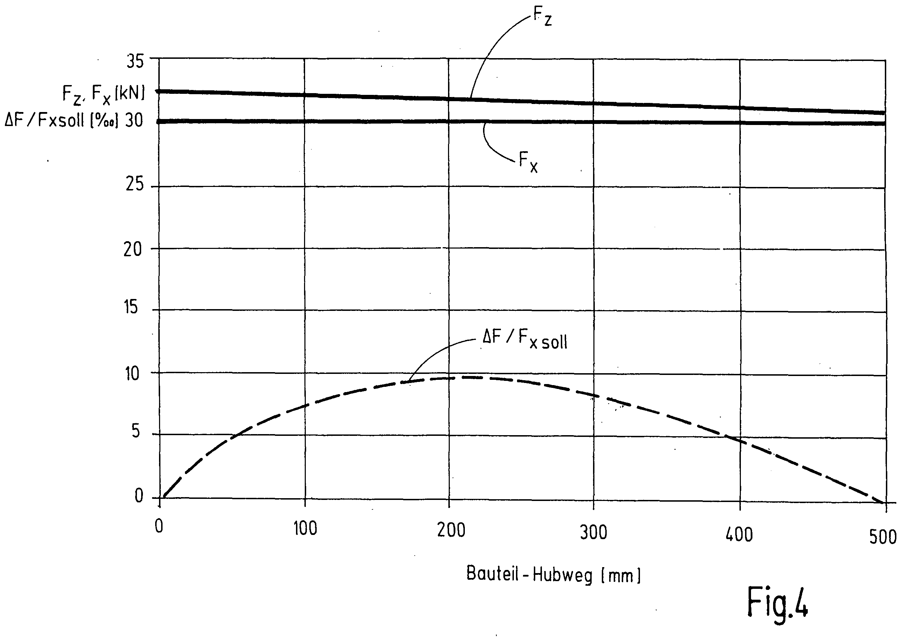

In Fig.4 ist die Kompensation der Speichercharakteristik durch die erfindungsgemäße Schrägstellung der Zylinder 9a - 9d und entsprechend der Aktuatoren 7a - 7d in Bezug zur Kraftrichtung F_{G} der zu kompensierenden Kraft F_{G} dargestellt. Es wird ein Hubvolumen der Zylinder 9a - 9d von 0,94 l und ein Speichervolumen des Energiespeichers 17 von 21,1 l betrachtet. In dem Diagramm sind der Betrag der Aktuatorkraft F_{Z} und der Kompensationskraft F_{X} = cos α · F_{Z} in der Einheit kN (Kilonewton) über den Hubweg des Bauteils 5 in vertikaler Richtung 3 in der Einheit mm (Millimeter) aufgezeichnet. Der gesamte Hubweg erstreckt sich im gezeigten Beispiel über 500 mm zwischen unterer Endlage (links) und oberer Endlage (rechts), jeweils in Blickrichtung gesehen.

Aus Fig. 4 gut ersichtlich ist, dass mit zunehmendem Hubweg, anders ausgedrückt zunehmender Höhe, des Bauteils 5 die Aktuatorkraft F_{Z} infolge einer Entleerung des Energiespeichers 17 abnimmt. Mit zunehmendem Hubweg bzw. zunehmender Höhe des Bauteils 5 verringert sich der von der Kraftrichtung F_{G} der Gewichtskraft F_{G} und der Aktuatorrichtung F_{Z} der Aktuatorkraft F_{Z} eingeschlossene Winkel α und der entsprechende Kosinuswert cos α erhöht sich. Im Ergebnis wird die Abnahme, genauer die betragsmäßige Verringerung, der Aktuatorkraft F_{Z} durch die entsprechende Verringerung des Winkels α kompensiert und die Kompensationskraft F_{X}, welche der Gewichtskraft F_{G} entgegengesetzt ist, bleibt über den gesamten Verlauf des Hubweges im Wesentlichen konstant.

Im Vergleich von Fig.4 mit Fig.2 zeigt sich der Vorteil der Erfindung besonders deutlich: In einer herkömmlichen Vorrichtung nimmt die Kompensationskraft Fx zur oberen Endlage hin ab, während sie bei einer erfindungsgemäßen Vorrichtung im gesamten Bereich konstant bleibt und die ebenfalls konstante Gewichtskraft F_{G} optimal kompensieren kann.

In Fig. 4 ist weiter mit gestrichelter Linie die Abweichung ΔF der Kompensationskraft F_{X} vom Sollwert F_{X soll} in Promille [‰] dargestellt. Bei einer Gewichtskraft von 30 kN, wie in dem gezeigten Beispiel, würden senkrecht stehende Zylinder eine Druckabweichung größer > 5 % bewirken. Durch Schrägstellung lässt sich die Abweichung, wie gezeigt, auf unter 1 % drücken, d.h., bei vorgegebener zulässiger Abweichung können durch Schrägstellung der Zylinder 9a - 9d die notwendigen Speichervolumina auf 1/5 reduziert werden.

In Fig.2 sind zudem im Vergleich zu einem herkömmlichen System (durchgezogene Linie) die möglichen Reduzierungen mit schräg gestelltem Zylinder (gestrichelte Linie) je nach zulässiger Sollwert-Abweichung dargestellt. Über den gesamten Bereich ergibt sich eine Reduzierung der erforderlichen Speicherkapazität V für den Energiespeicher 17 und die Arbeitsräume 15a - 15d der Zylinder 9a - 9d um einen Faktor > 5. Die Vorgehensweise, durch Schrägstellen bzw. Winkelauslenkung des die Kompensationskraft F_{X} erzeugenden Aktuators 7a - 7d die für den Energiespeicher 17 erforderliche Speichergröße und damit die Speicherkosten erheblich zu reduzieren, lässt sich in gleicher Weise auf pneumatische und/oder mechanische Energiespeichersysteme übertragen.

## Patentansprüche

1. Vorrichtung (1) zur Erzeugung einer Kompensationskraft (F_{X}), die gegen eine in eine Kraftrichtung (F_{G}) wirkende Gewichtskraft (F_{G}) mindestens eines bewegbaren Bauteils (5) wirkt,
- umfassend mindestens einen in eine Aktuatorrichtung (F_{Z}) bewegbaren Aktuator (7a, 7d), der an mindestens einen Energiespeicher (17) anschließbar ist und mit einer Aktuatorkraft (F_{Z}) am jeweiligen Bauteil (5) angreift,
- wobei die Kraftrichtung (F_{G}) und die Aktuatorrichtung (F_{Z}) einen vorgebbaren Winkel (α) derart einschließen, dass die gegen die Kraftrichtung (F_{G}) gerichtete Kraftkomponente (cos α · F_{Z}) der Aktuatorkraft (F_{Z}) die Kompensationskraft (F_{X}) zur Gewichtskraft (F_{G}) bildet, und wobei der mindestens eine Aktuator (7a - 7d) ein Stellglied eines hydraulischen Zylinders (9a - 9d) ist,
- **dadurch gekennzeichnet, dass** der Winkel (α) in Abhängigkeit der Lage des jeweiligen Bauteils (5), der zu kompensierenden Kraft (F_{G}) und/oder des Speicherzustandes des Energiespeichers (17) variiert, so dass durch entsprechende Wahl der verschiedenen Einflussparamter, wie der Abmessungen der Zylinder, deren Stellglied der jeweilige Aktuator (7a, 7b) ist, des Winkels (α) als Maß der Schrägstellung und der Speicherkapazität des Energiespeichers (17), die Energie im Energiespeicher (17) und damit die Aktuatorkraft (Fz) bei einer vorgegebenen Bewegung, wie einem Zylinderhub, des Bauteils (5) genau um den Betrag ansteigen kann, um den durch eine Vergrößerung des Winkels (α) die Kompensationskraft (F_{X}) bzw. die entsprechende Kraftkomponente (cos α · F_{Z}) verringert wird.

2. Vorrichtung nach Anspruch 1, **dadurch gekennzeichnet, dass** der Winkel (α) in einem Bereich 0° < α < 90° gewählt ist.

3. Vorrichtung nach einem der vorhergehenden Ansprüche, **dadurch gekennzeichnet, dass** die zu kompensierende Kraft zumindest die Gewichtskraft (F_{G}) des Bauteils (5) ist.

4. Vorrichtung nach einem der vorhergehenden Ansprüche, **dadurch gekennzeichnet, dass** mehrere an einen gemeinsamen Energiespeicher (17) anschließbare Aktuatoren (7a - 7d) vorgesehen sind.

5. Vorrichtung nach einem der vorhergehenden Ansprüche, **dadurch gekennzeichnet, dass** der mindestens eine Energiespeicher (17) hydraulisch, pneumatisch und/oder mechanisch ausgebildet ist.

6. Bewegungseinrichtung zum Bewegen eines Bauteils (5), insbesondere Hubeinrichtung zum Anheben und Absenken eines Bauteils (5), mit einer Vorrichtung nach einem der vorhergehenden Ansprüche.

7. Bewegungseinrichtung nach Anspruch 6, **dadurch gekennzeichnet, dass** zum Bewegen des Bauteils (5) im Energiespeicher (17) gespeicherte Energie verbraucht wird.

## Claims

1. Device (1) for generating a compensation force (F_{X}), which acts against a weight force (F_{G}) acting in a force direction (F_{G}) of at least one movable component (5), comprising at least one actuator (7a, 7d), which can be moved in an actuator direction (F_{Z}), which can be connected to at least one energy accumulator (17) and acts on the component (5) with an actuator force (F_{Z}),
wherein the force direction (F_{G}) and the actuator direction (F_{Z}) enclose a predetermined angle (α) in such a way that the force component (cos α • F_{Z}) of the actuator force (F_{Z}) directed against the force direction (F_{G}) forms the compensation force (F_{X}) to the weight force (F_{G}) and wherein the at least one actuator (7a - 7d) is a servo-components of a hydraulic cylinder (9a - 9d),
**characterised in that** the angle (α) varies depending on the position of the component (5), the force to be compensated (F_{G}) and/or the storage condition of the energy accumulator (17), with the result that, through the appropriate choice of influencing parameters, such as the dimensions of the cylinders, the servo-component of which is the actuator (7a, 7b), the angle (α) as a measure of the inclined position, and the storage capacity of the energy accumulator (17), the energy in the energy accumulator (17) and thus the actuator force (F_{Z}) for a predetermined movement, such as a cylinder stroke, of the component (5) may increase precisely by the amount by which, through an increase in the angle (α) the compensation force (F_{X}) or the appropriate force component (cos α • F_{Z}) is reduced.

2. Device according to claim 1, **characterised in that** the angle (α) is chosen in a range 0° < α < 90°.

3. Device according to any one of the preceding claims, **characterised in that** the force to be compensated is at least the weight force (F_{G}) of the component (5).

4. Device according to any one of the preceding claims, **characterised in that** a plurality of actuators (7a - 7d) are provided, which can be connected to a common energy accumulator (17).

5. Device according to any one of the preceding claims, **characterised in that** the at least one energy accumulator (17) is hydraulically, pneumatically and/or mechanically formed.

6. Movement mechanism for moving a component (5), in particular a lifting device to raise and lower a component (5), with a device according to any one of the preceding claims.

7. Movement mechanism according to claim 6, **characterised in that** energy stored in the energy accumulator (17) is used to move the component (5).

## Revendications

1. Système (1) de production d'une force (Fₓ) de compensation, qui s'oppose à un poids (F_{c}), agissant dans un sens (F_{c}) de force, d'au moins une pièce (5) mobile,
- comprenant au moins un actionneur (7a, 7d), qui est mobile dans un sens (F_{z}) d'actionneur, qui peut être raccordé à au moins un accumulateur (17) d'énergie et qui attaque la pièce (5) par une force (F_{z}) d'actionneur,
- dans lequel le sens (F_{c}) de force et le sens (F_{z}) d'actionneur font un angle (α) pouvant être donné à l'avance, de manière à ce que la composante (cos α · F_{z}) de force, dirigée en sens contraire au sens (F_{c}) de force de la force (F_{z}) d'actionneur, forme la force (Fₓ) de compensation du poids (F_{c}) et dans lequel le au moins un actionneur (7a - 7d) est un organe de commande d'un vérin (9a - 9d) hydraulique,
- **caractérisé en ce que** l'angle (a) varie en fonction de la position de la pièce (5), du poids (F_{c}) à compenser et/ou de l'état d'accumulation de l'accumulateur (17) d'énergie, de manière à ce que, par un choix judicieux des divers paramètres d'influence, comme les dimensions du vérin, dont l'organe de réglage est l'actionneur (7a, 7b) respectif, de l'angle (α) comme mesure de la position inclinée et de la capacité d'accumulation de l'accumulateur (17) d'énergie, l'énergie dans l'accumulateur (17) d'énergie et ainsi la force (F_{z}) d'actionneur puissent, pour un déplacement donné à l'avance, comme une course du vérin, de la pièce (5), être augmentés exactement de la valeur, dont, par un agrandissement de l'angle (α), la force (Fₓ) de compensation ou la composante (cos α · F_{z}) de force correspondante est diminuée.

2. Système suivant la revendication 1, **caractérisé en ce que** l'angle (α) est choisi dans une plage de 0° < α < 90°.

3. Système suivant l'une des revendications précédentes, **caractérisé en ce que** la force à compenser est au moins le poids (F_{c}) de la pièce (5).

4. Système suivant l'une des revendications précédentes, **caractérisé en ce qu'**il est prévu plusieurs actionneurs (7a - 7c) pouvant être raccordés à un accumulateur (17) d'énergie commun.

5. Système suivant l'une des revendications précédentes, **caractérisé en ce que** le au moins un accumulateur (17) d'énergie est constitué hydrauliquement, pneumatiquement et/ou mécaniquement.

6. Dispositif de déplacement pour déplacer une pièce (5), notamment dispositif de levage pour lever et abaisser une pièce (5), comprenant un système suivant l'une des revendications précédentes.

7. Dispositif de déplacement suivant la revendication 6, **caractérisé en ce que** l'on utilise de l'énergie accumulée dans l'accumulateur (17) d'énergie pour déplacer la pièce (5) .
